(19) Europäisches Patentamt
European Patent Office
Office européen des brevets

(11) **EP 4 685 113 A1**

(12) **EUROPEAN PATENT APPLICATION**
published in accordance with Art. 153(4) EPC

(43) Date of publication:
**28.01.2026 Bulletin 2026/05**

(21) Application number: **25732877.3**

(22) Date of filing: **15.05.2025**

(51) International Patent Classification (IPC):
**C01D 15/04** (2006.01)    **H01M 10/54** (2006.01)

(52) Cooperative Patent Classification (CPC):
**C22B 3/22; C22B 1/08; C22B 7/006; C22B 26/12;
H01M 10/54;** Y02W 30/84

(86) International application number:
**PCT/CN2025/095093**

(87) International publication number:
**WO 2025/246954 (04.12.2025 Gazette 2025/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.05.2024 CN 202410697168**

(71) Applicants:
• **Chenzhou Hui Neng Energy Storage Materials
Engineering Research Center Co., Ltd.
Chenzhou, Hunan 423000 (CN)**
• **Hunan Zhi Yuan New Materials Co., Ltd.
Lugu Subdistrict, Xiangjiang New District
Changsha, Hunan 410000 (CN)**

(72) Inventors:
• **ZHONG, Faping
Chenzhou, Hunan 423000 (CN)**

• **LIU, Hongbing
Chenzhou, Hunan 423000 (CN)**
• **XIONG, Yizhi
Chenzhou, Hunan 423000 (CN)**
• **ZHU, Jiqun
Chenzhou, Hunan 423000 (CN)**
• **JIANG, Subin
Chenzhou, Hunan 423000 (CN)**
• **TAN, Shuifa
Chenzhou, Hunan 423000 (CN)**
• **HE, Chihuan
Chenzhou, Hunan 423000 (CN)**
• **CHENG, Jie
Chenzhou, Hunan 423000 (CN)**

(74) Representative: **Kurig, Thomas
Becker Kurig & Partner
Patentanwälte mbB
Bavariastraße 7
80336 München (DE)**

(54) **METHOD FOR RECOVERING LITHIUM FROM SPENT LITHIUM IRON PHOSPHATE BATTERY**

(57)    The present invention provides a lithium recycling method for waste lithium iron phosphate batteries, comprises: placing black powder of a positive electrode of a waste lithium iron phosphate battery in a roasting processing furnace filled with protective gas for a roasting reaction. During this, the input chlorine flow rate is adjusted based on the mixture in the roasting processing furnace to control the roasting reaction temperature at 50-300°C. The roasted product is then immersed in water to obtain a roasted product solution. Suction filtration of the roasted product solution yields a filtrate. Evaporation concentration followed by drying of the filtrate prepares lithium chloride crystals. This one-step low-temperature roasting, with temperature controlled by adjusting the input chlorine flow rate, converts the lithium element into water-soluble lithium chloride. The method is simple, efficient, low in energy consumption, achieves over 95% lithium element recycling rate, and has significant industrial application value.

**(Cont. next page)**

EP 4 685 113 A1

Fig. 1

## Description

### Field of invention

The present invention relates to the field of battery recycling, and in particular to a recycling method for lithium in a waste lithium iron phosphate battery.

### Background art of the invention

With the development of the domestic new energy industry, a large number of batteries have been produced and used. After used for a period of time, the batteries undergo gradual capacity fading and fail to satisfy the needs of application scenarios. Thus, the batteries are phased out as industrial wastes. With the expansion of the sales of new energy automobiles, power batteries to be retired and raw and auxiliary materials thereof have been increased, and the recycling of waste batteries has become an urgent industry demand. Meanwhile, the waste batteries contain a large number of metal elements such as nickel, lithium and iron which have high recycling value. Through advanced and reasonable extraction methods, the cost may be lower than that of smelting from ores, and the damage to the natural environment can also be reduced.

At present, the recycling of waste lithium-ion batteries generally relies on wet processes, supplemented by pyrometallurgical processes for processing electrolytes, separators and binders. However, at present, the wet processes and the pyrometallurgical processes have the following shortcomings: 1. the processes have long and complex flow, and high cost; 2. the recycling rate of lithium element in waste lithium iron phosphate batteries is low, resulting in poor economic benefits.

### Disclosure of the invention

To solve the above technical problems, the present invention aims to provide a recycling method for lithium in a waste lithium iron phosphate battery, with simple technology, high reaction efficiency, low energy consumption and high recycling rate.

The present invention is realized by the following solution:

The recycling method for lithium in the waste lithium iron phosphate battery is provided. The method comprises:

placing black powder of a positive electrode of a waste lithium iron phosphate battery in a roasting processing furnace filled with protective gas for a roasting reaction, meanwhile adjusting an input chlorine flow rate based on a mixture in the roasting processing furnace to control a temperature of the roasting reaction, and controlling the temperature of the roasting reaction as 50-300°C;

immersing a roasted product after the roasting reaction in water to obtain a roasted product solution;

conducting suction filtration for the roasted product solution to obtain a filtrate;

conducting evaporation concentration for the filtrate and then drying the filtrate to prepare lithium chloride crystals;

wherein adjusting the input chlorine flow rate based on the mixture in the roasting processing furnace to control the temperature of the roasting reaction is expressed by a formula:

$$a * \left( \frac{Q_c - m * c_p * \Delta T}{Q_r} \right) \leq L \leq a * \left( \frac{Q_c + m * c_p * \Delta T}{Q_r} \right)$$

in the formula, $a$ represents a conversion coefficient of a molar quantity and a volume, and $a$ = 11.2; $Q_c$ represents a heat dissipation quantity of the roasting processing furnace per minute, which is relevant to the roasting processing furnace; $Q_r$ represents a heat yield of a chemical reaction of one mole of lithium iron phosphate per minute in the roasting reaction; m represents a total mass of the mixture in the roasting processing furnace; $c_p$ represents a specific heat capacity of the mixture in the roasting processing furnace; $\Delta T$ represents a maximum allowable temperature deviation of the temperature of the roasting reaction, and the maximum temperature deviation value is generally set between 10 and 30°C; and L represents a chlorine flow rate input into the roasting processing furnace per minute.

In the actual production process, firstly, the data under different states are measured on the basis of a corresponding measuring device, and a corresponding database is established and stored in a control system; then, the corresponding data in the database is queried for a real-time state; and the chlorine flow rate is calculated. Specifically, firstly, the device is fixed, and heat dissipation rates under different states are measured to form a $Q_c$ database; then, a table is looked up to obtain a value according to the current state; $Q_r$ is obtained by directly measuring reaction heat; $c_p$ is

obtained by firstly measuring the specific heat capacity of each single substance and then conducting calculation according to a mass ratio; and according to the total mass of the mixture in the current roasting processing furnace, the conversion coefficient $a$, the maximum allowable temperature deviation $\Delta T$ of the roasting reaction and the obtained values of $Q_c$, $Q_r$ and $c_p$, the control range of the chlorine flow rate input into the roasting processing furnace per minute can be calculated. Because the reaction in the roasting processing furnace continues, the chlorine flow rate is continuously changed according to differences of reaction time. Wherein the time of the roasting reaction is related to the capacity, heat dissipation capacity and material quantity of the roasting processing furnace. In general, the time of the roasting reaction is controlled as 20-50 min.

The present application controls the temperature of the roasting reaction in the roasting processing furnace by controlling the chlorine flow rate, which can not only effectively control the temperature of the roasting reaction, but also reduce other temperature regulation devices for temperature control of the roasting processing furnace, thereby reducing the production cost.

Wherein a chemical reaction formula of the roasting reaction is as follows:

$$LiFePO_4 + 0.5Cl_2 \rightarrow LiCl + FePO_4$$

The roasting reaction converts the lithium element in the black powder of the positive electrode of the waste lithium iron phosphate battery into water-soluble lithium chloride, and converts the iron and phosphorus elements into water-insoluble iron phosphate. Moreover, the lithium content in the roasted product can reach more than 95% of the lithium content in the black powder of the positive electrode of the waste lithium iron phosphate battery. Therefore, after the roasted product is immersed in water, the water-soluble lithium chloride is separated from the iron phosphate. After suction filtration, and evaporation concentration and drying, the lithium chloride crystals are prepared, thereby achieving the recycling of the lithium in the waste lithium iron phosphate battery. Wherein the suction filtration, and evaporation concentration and drying technologies are the prior arts, and will not be repeated here.

Wherein the weight of the lithium iron phosphate in the black powder of the positive electrode is calculated according to the mass content of lithium, iron and phosphorus in the black powder of the positive electrode of the waste lithium iron phosphate battery. Generally, the content of lithium and phosphorus is slightly higher than the content of iron because the electrolyte also contains a small amount of lithium and phosphorus. The mass content of lithium in the black powder of the positive electrode is $\geq 4.0\%$, and the mass content of iron is $\geq 30\%$.

Further, after the roasting reaction is completed in the roasting processing furnace, the protective gas is firstly filled into the roasting processing furnace so that remaining chlorine in the roasting processing furnace is completely replaced, and then the roasted product is taken out. It should be noted that the replaced chlorine needs to be transported into an external tail gas absorption apparatus for recycling processing.

Further, immersing the roasted product in water is specifically: pure water is added to the roasted product prepared from the roasting reaction, and the roasted product is heated to a preset temperature for stirring until the roasted product is completely immersed.

Further, a use amount of the pure water is calculated based on 10-50 g of the pure water needed for 1 g of the roasted product.

Further, the preset temperature is controlled as 40-70°C, and stirring time is controlled as more than 2 hours.

Further, the protective gas is nitrogen or inert gas. The inert gas is generally argon or helium.

The recycling method for lithium in the waste lithium iron phosphate battery provided by the present invention controls the temperature of the roasting reaction in the roasting processing furnace by controlling the chlorine flow rate, which can not only effectively control the temperature of the roasting reaction, but also reduce other temperature regulation devices for temperature control of the roasting processing furnace, thereby reducing the production cost. Moreover, the roasting temperature in the method is low. The method adopts a one-step roasting method with chlorine, which can convert the lithium element in the waste lithium iron phosphate battery into water-soluble lithium chloride. The roasted product is subjected to water immersion, suction filtration, and evaporation concentration and drying to obtain the lithium chloride crystals, thereby achieving the recycling of the lithium in the waste lithium iron phosphate battery. The method is simple in technology, high in reaction efficiency and low in energy consumption, and has a lithium recycling rate of more than 95%. Moreover, the method can also well satisfy environmental protection requirements, and has great industrial application value.

**Description of the drawings**

Fig. 1 shows a phase qualitative analysis spectrogram of a roasting reaction product in embodiment 1 of the present application;

Fig. 2 shows a phase qualitative analysis spectrogram of a roasting reaction product in embodiment 2 of the present application;

Fig. 3 shows a phase qualitative analysis spectrogram of a roasting reaction product in embodiment 3 of the present application.

**Detailed description of the invention**

The present invention is further described below in combination with embodiments. However, the present invention is not limited to the description of the embodiments.

Embodiment 1

100 kg of black powder raw material of a positive electrode of a waste lithium iron phosphate battery was taken, wherein the content of lithium iron phosphate was 86.4%, the content of graphite was 11.8%, and the rest were impurities such as copper, aluminum, fluorine and titanium; the black powder raw material of the positive electrode of the waste lithium iron phosphate battery was placed in a vacuum oven, baked at 150°C for 2 hours and cooled naturally to room temperature to obtain the dried black powder of the positive electrode of the waste lithium iron phosphate battery.

The dried black powder of the positive electrode of the waste lithium iron phosphate battery was added to a roasting processing furnace, and heated to a reaction temperature of 180°C; chlorine with a purity of 99.99% was introduced for a selective reaction; in the process of a roasting reaction, the maximum allowable temperature deviation of the roasting reaction was controlled as 30°C by adjusting a chlorine flow rate; the time of the roasting reaction was 30 minutes; after the roasting reaction was completed, the black powder was naturally cooled; and the chlorine flow rate was controlled as 210-220 L/min.

Tail gas produced by the roasting reaction was absorbed by spraying alkaline liquid, and was discharged after reaching the standard through purification processing.

Nitrogen was filled into the roasting processing furnace so that the remaining chlorine in the roasting processing furnace was completely replaced, and the replaced chlorine was transported into an external tail gas absorption apparatus for recycling processing.

The roasted product was taken out, and pure water was added to the roasted product, heated to 60°C and stirred for 8 hours to obtain a roasted product solution, wherein the use amount of the pure water was calculated based on 20 g of the pure water needed for 1 g of the roasted product.

Suction filtration was conducted for the roasted product solution to obtain a filtrate.

The filtrate was boiled in an evaporating dish until all water vapor evaporated to obtain an evaporation concentration product, and the evaporation concentration product was dried under an environment of 60°C for 4 hours to prepare lithium chloride crystals.

Embodiment 2

100 kg of black powder raw material of a positive electrode of a waste lithium iron phosphate battery was taken, wherein the content of lithium iron phosphate was 93.2%, the content of graphite was 5.3%, and the rest were impurities such as copper, aluminum, fluorine and titanium; the black powder raw material of the positive electrode of the waste lithium iron phosphate battery was placed in a vacuum oven, baked at 150°C for 2 hours and cooled naturally to room temperature to obtain the dried black powder of the positive electrode of the waste lithium iron phosphate battery.

The dried black powder of the positive electrode of the waste lithium iron phosphate battery was added to a roasting processing furnace, and heated to a reaction temperature of 300°C; chlorine with a purity of 99.99% was introduced for a selective reaction; in the process of a roasting reaction, the maximum allowable temperature deviation of the roasting reaction was controlled as 20°C by adjusting a chlorine flow rate; the time of the roasting reaction was 20 minutes; after the roasting reaction was completed, the black powder was naturally cooled; and the chlorine flow rate was controlled as 345-365 L/min.

Tail gas produced by the roasting reaction was absorbed by spraying alkaline liquid, and was discharged after reaching the standard through purification processing.

Nitrogen was filled into the roasting processing furnace so that the remaining chlorine in the roasting processing furnace was completely replaced, and the replaced chlorine was transported into an external tail gas absorption apparatus for recycling processing.

The roasted product was taken out, and pure water was added to the roasted product, heated to 50°C and stirred for 4 hours to obtain a roasted product solution, wherein the use amount of the pure water was calculated based on 40 g of the pure water needed for 1 g of the roasted product.

Suction filtration was conducted for the roasted product solution to obtain a filtrate.

The filtrate was boiled in an evaporating dish until all water vapor evaporated to obtain an evaporation concentration product, and the evaporation concentration product was dried under an environment of 80°C for 2 hours to prepare lithium chloride crystals.

Embodiment 3

100 kg of black powder raw material of a positive electrode of a waste lithium iron phosphate battery was taken, wherein the content of lithium iron phosphate was 52.3%, the content of graphite was 41.2%, and the rest were impurities such as copper, aluminum, fluorine and titanium; the black powder raw material of the positive electrode of the waste lithium iron phosphate battery was placed in a vacuum oven, baked at 150°C for 2 hours and cooled naturally to room temperature to obtain the dried black powder of the positive electrode of the waste lithium iron phosphate battery.

The dried black powder of the waste lithium iron phosphate battery was added to a roasting reaction furnace, and heated to a reaction temperature of 50°C; chlorine with a purity of 99.99% was introduced for a selective reaction; in the process of a roasting reaction, the maximum allowable temperature deviation of the roasting reaction was controlled as 10°C by adjusting a chlorine flow rate; the time of the roasting reaction was 50 minutes; after the roasting reaction was completed, the black powder was naturally cooled; and the chlorine flow rate was 130-140 L/min.

Tail gas produced by the roasting reaction was absorbed by spraying alkaline liquid, and was discharged after reaching the standard through purification processing.

Nitrogen was filled into the roasting processing furnace so that the remaining chlorine in the roasting processing furnace was completely replaced, and the replaced chlorine was transported into an external tail gas absorption apparatus for recycling processing.

The roasted product was taken out, and pure water was added to the roasted product, heated to 55°C and stirred for 3 hours to obtain a roasted product solution, wherein the use amount of the pure water was calculated based on 50 g of the pure water needed for 1 g of the roasted product.

Suction filtration was conducted for the roasted product solution to obtain a filtrate.

The filtrate was boiled in an evaporating dish until all water vapor evaporated to obtain an evaporation concentration product, and the evaporation concentration product was dried under an environment of 70°C for 3 hours to prepare lithium chloride crystals.

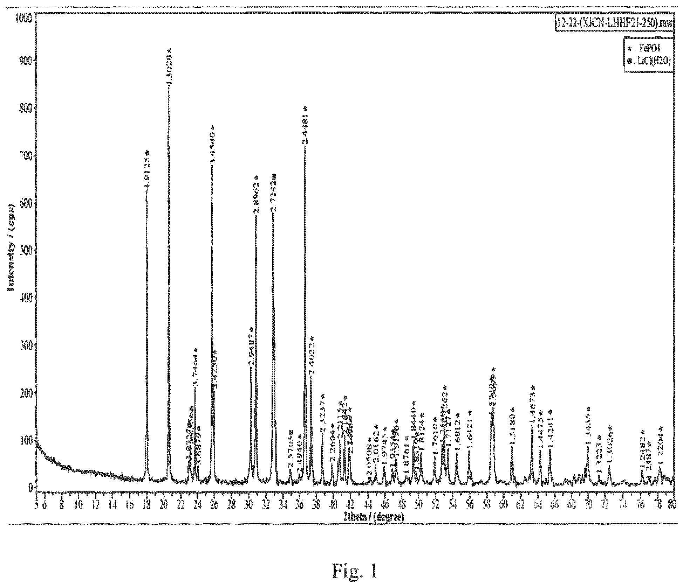

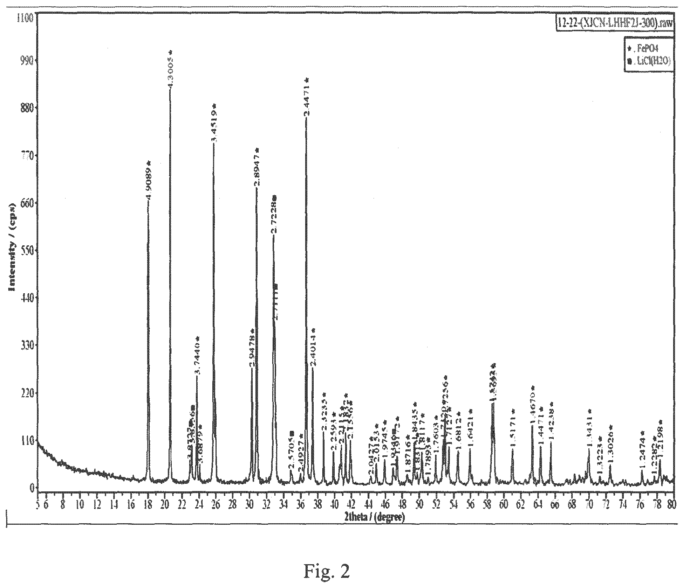

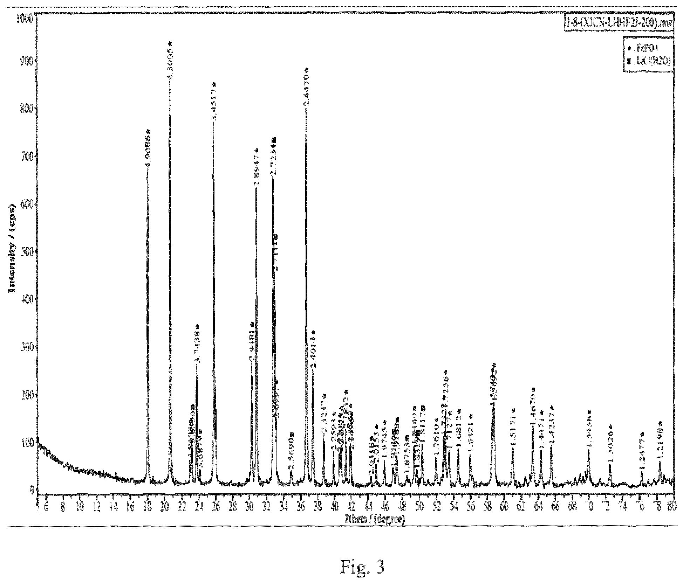

The roasted products in embodiments 1, 2 and 3 were taken respectively and subjected to XRD phase qualitative analysis, as shown in Fig. 1, Fig. 2 and Fig. 3. Analysis results indicated that the main components of the roasted products taken from the three embodiments were lithium iron phosphate and lithium chloride, wherein in Fig. 1, Fig. 2 and Fig. 3, abscissas represented $2\theta$ diffraction angles, i.e., angles between the extension line of an incident X-ray and a reflected X-ray, and ordinates represented the intensity after diffraction.

In addition, based on an ICP element analysis method, the products after evaporation concentration and drying in embodiment 1, embodiment 2 and embodiment 3 were detected and analyzed respectively. The analysis results were shown in Table 1:

Table 1 Table of Detection and Analysis Results of Products after Evaporation Concentration and Drying in Embodiments 1-3

|  | Embodiment 1 | Embodiment 2 | Embodiment 3 |
|---|---|---|---|
| Purity of lithium chloride (%) | 99.6 | 99.52 | 99.7 |
| Lithium extraction rate (%) | 96.7 | 96.0 | 95.6 |

It can be seen from Table 1 that the purity of lithium chloride in the three embodiments is more than 99.5%, and the lithium extraction rate is more than 95%, wherein impurity elements in the evaporation concentration product of embodiment 1 are: Fe with content of 20 ppm, P with content of 12 ppm, F with content of 2 ppm, Cu with content of 3 ppm, Al with content of 4 ppm, Ti with content of 0.6 ppm and Ca with content of 2 ppm respectively; impurity elements in the evaporation concentration product of embodiment 2 are: Fe with content of 12 ppm, P with content of 6 ppm, F with content of 1 ppm, Cu with content of 0.5 ppm, Al with content of 2 ppm, Ti with content of 0.5 ppm and Ca with content of 1 ppm respectively; and impurity elements in the evaporation concentration product of embodiment 3 are: Fe with content of 67 ppm, P with content of 35 ppm, F with content of 8 ppm, Cu with content of 16 ppm, Al with content of 15 ppm, Ti with content of 0.8 ppm and Ca with content of 3 ppm respectively. It can be seen that the content of the impurity elements in the three embodiments reaches ppm level. Therefore, the lithium recycling rate in the recycling method for lithium in the waste lithium iron phosphate battery provided by the present invention is high, and the purity of the recycled lithium chloride product is high. Moreover, the method is simple in technology and low in energy consumption, can well satisfy environmental protection requirements, and has great industrial application value.

**Claims**

1. A recycling method for lithium in a waste lithium iron phosphate battery, **characterized in that**: the method comprises:

   placing black powder of a positive electrode of a waste lithium iron phosphate battery in a roasting processing furnace filled with protective gas for a roasting reaction, meanwhile adjusting an input chlorine flow rate based on a mixture in the roasting processing furnace to control a temperature of the roasting reaction, and controlling the temperature of the roasting reaction as 50-300°C;
   immersing a roasted product after the roasting reaction in water to obtain a roasted product solution;
   conducting suction filtration for the roasted product solution to obtain a filtrate;
   conducting evaporation concentration for the filtrate and then drying the filtrate to prepare lithium chloride crystals;
   wherein adjusting the input chlorine flow rate based on the mixture in the roasting processing furnace to control the temperature of the roasting reaction is expressed by a formula:

   $$a * \left( \frac{Q_c - m * c_p * \Delta T}{Q_r} \right) \leq L \leq a * \left( \frac{Q_c + m * c_p * \Delta T}{Q_r} \right)$$

   in the formula, $a$ represents a conversion coefficient of a molar quantity and a volume; $Q_c$ represents a heat dissipation quantity of the roasting processing furnace per minute; $Q_r$ represents a heat yield of a chemical reaction of one mole of lithium iron phosphate per minute in the roasting reaction; m represents a total mass of the mixture in the roasting processing furnace; $c_p$ represents a specific heat capacity of the mixture in the roasting processing furnace; $\Delta T$ represents a maximum allowable temperature deviation of the temperature of the roasting reaction; and L represents a chlorine flow rate input into the roasting processing furnace per minute.

2. The recycling method for lithium in the waste lithium iron phosphate battery as claimed in claim 1, **characterized in that**: after the roasting reaction is completed in the roasting processing furnace, the protective gas is firstly filled into the roasting processing furnace so that remaining chlorine in the roasting processing furnace is completely replaced, and then the roasted product is taken out.

3. The recycling method for lithium in the waste lithium iron phosphate battery as claimed in any one of claim 1-2, **characterized in that**: immersing the roasted product in water is specifically: pure water is added to the roasted product prepared from the roasting reaction, and the roasted product is heated to a preset temperature for stirring until the roasted product is completely immersed.

4. The recycling method for lithium in the waste lithium iron phosphate battery as claimed in claim 3, **characterized in that**: a use amount of the pure water is calculated based on 10-50 g of the pure water needed for 1 g of the roasted product.

5. The recycling method for lithium in the waste lithium iron phosphate battery as claimed in any one of claim 4, **characterized in that**: the preset temperature is controlled as 40-70°C, and stirring time is controlled as more than 2 hours.

6. The recycling method for lithium in the waste lithium iron phosphate battery as claimed in any one of claim 1-2, **characterized in that**: the protective gas is nitrogen or inert gas.

Fig. 1

Fig. 2

Fig. 3

## INTERNATIONAL SEARCH REPORT

| International application No. |
|---|
| **PCT/CN2025/095093** |

**A. CLASSIFICATION OF SUBJECT MATTER**

C01D15/04(2006.01)i; H01M10/54(2006.01)i

According to International Patent Classification (IPC) or to both national classification and IPC

**B. FIELDS SEARCHED**

Minimum documentation searched (classification system followed by classification symbols)

IPC: C01D 15/-, H01M 10/-

Documentation searched other than minimum documentation to the extent that such documents are included in the fields searched

Electronic data base consulted during the international search (name of data base and, where practicable, search terms used)

CNABS, CNTXT, ENTXTC, CNKI, VEN, ENTXT, WEB OF SCIENCE: 磷酸铁锂, 锂, 回收, 再利用, 氯气, Cl2, 流量, 调节, 控制, 氯化锂, LiCl, lithium iron phosphate, LiFePO4, lithium, recycl+, reuse, chlorine, flow rate, regulat+, control, lithium chloride

**C. DOCUMENTS CONSIDERED TO BE RELEVANT**

| Category* | Citation of document, with indication, where appropriate, of the relevant passages | Relevant to claim No. |
|---|---|---|
| PX | CN 118387898 A (CHENZHOU HUINENG ENERGY STORAGE MATERIAL ENGINEERING RESEARCH CENTER CO., LTD. et al.) 26 July 2024 (2024-07-26) claims 1-6 | 1-6 |
| A | CN 110331288 A (HUNAN BRUNP RECYCLING TECHNOLOGY CO., LTD. et al.) 15 October 2019 (2019-10-15) claims 1-9 | 1-6 |
| A | CN 115893345 A (GUANGZHOU INSTITUTE OF ENERGY CONVERSION, CHINESE ACADEMY OF SCIENCES et al.) 04 April 2023 (2023-04-04) entire document | 1-6 |
| A | CN 114015885 A (CENTRAL SOUTH UNIVERSITY) 08 February 2022 (2022-02-08) entire document | 1-6 |
| A | CN 117550628 A (SHENZHEN HUINENG ENERGY STORAGE MATERIALS ENGINEERING RESEARCH CENTER CO., LTD. et al.) 13 February 2024 (2024-02-13) entire document | 1-6 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 August 2025** | **27 August 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2025/095093**

**C.    DOCUMENTS CONSIDERED TO BE RELEVANT**

| Category* | Citation of document, with indication, where appropriate, of the relevant passages | Relevant to claim No. |
|---|---|---|
| A | JP 2012229481 A (JAPAN METALS & CHEMICALS CO., LTD.) 22 November 2012 (2012-11-22) <br> entire document | 1-6 |

Form PCT/ISA/210 (second sheet) (July 2022)

**INTERNATIONAL SEARCH REPORT**
Information on patent family members

International application No.

**PCT/CN2025/095093**

| Patent document cited in search report | | | Publication date (day/month/year) | Patent family member(s) | Publication date (day/month/year) |
|---|---|---|---|---|---|
| CN | 118387898 | A | 26 July 2024 | None | |
| CN | 110331288 | A | 15 October 2019 | None | |
| CN | 115893345 | A | 04 April 2023 | None | |
| CN | 114015885 | A | 08 February 2022 | None | |
| CN | 117550628 | A | 13 February 2024 | None | |
| JP | 2012229481 | A | 22 November 2012 | None | |

Form PCT/ISA/210 (patent family annex) (July 2022)